**Europäisches Patentamt**

**European Patent Office**

**Office européen des brevets**

(19)

(11) Veröffentlichungsnummer: **0 252 401**
**B1**

(12)

# EUROPÄISCHE PATENTSCHRIFT

(45) Veröffentlichungstag der Patentschrift:
**10.10.90**

(21) Anmeldenummer: **87109339.9**

(22) Anmeldetag: **29.06.87**

(51) Int. Cl.⁵: **B05C 17/005,** B65D 83/76,
B05B 11/00

(54) **Austraggerät zur Bedienung von Kartuschen.**

(30) Priorität: **07.07.86 CH 2731/86**
**26.01.87 CH 252/87**

(43) Veröffentlichungstag der Anmeldung:
**13.01.88 Patentblatt 88/2**

(45) Bekanntmachung des Hinweises auf die Patenterteilung:
**10.10.90 Patentblatt 90/41**

(84) Benannte Vertragsstaaten:
**CH DE ES FR GB IT LI NL SE**

(56) Entgegenhaltungen:
**EP-A- 0 054 702**
**EP-A- 0 213 073**
**DE-A- 3 128 611**
**DE-A- 3 412 222**
**FR-A- 2 259 960**
**FR-A- 2 526 070**
**FR-A- 2 529 930**

(73) Patentinhaber: **Keller, Wilhelm A., Grundstrasse 12,**
**CH-6343 Rotkreuz(CH)**

(72) Erfinder: **Keller, Wilhelm A., Grundstrasse 12,**
**CH-6343 Rotkreuz(CH)**

(74) Vertreter: **Kägi, Otto, Patentanwalt**
**Hinterbergstrasse 36 Postfach, CH-6330 Cham(CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Austraggerät zur Bedienung von mit Förderkolben versehenen Kartuschen, mit einem am Gerätekörper längsbeweglich geführten Stössel für die Förderkolben-Beaufschlagung sowie Vortriebsmitteln für den Stössel. Siehe z.B. EP-A 0 054 702 und FR-A 2 259 960.

Die zur Verwendung mit dem Austragsgerät bestimmten, austauschbar mit diesem zu verbindenden Kartuschen dienen in bekannter Weise zur Verarbeitung von pastösen oder dickflüssigen Massen, die bei Einwirkung auf den Förderkolben durch die Kartuschenmündung ausgetragen werden. Eine Schwierigkeit beim Arbeiten mit solchen Kartuschen besteht darin, dass der Inhalt zum Nachfliessen neigt, nachdem die Beaufschlagung des Förderkolbens aufgehört hat. Diese Erscheinung ist unerwünscht und lästig, weil sie ein sauberes Arbeiten behindert und das genau dosierte Austragen verunmöglicht. Als eine Ursache des Nachfliessens wurde erkannt, dass der Kartuschenkörper - meist als dünnwandiges Wegwerfteil aus Kunststoff ausgeführt - beim Austragen "atmet", d.h. unter dem Druck des Kartuscheninhaltes beim Kolbenvortrieb von innen her elastisch gedehnt wird und nach Wegfall des Austragdruckes wieder die Ausgangsgestalt annimmt. Ausserdem ist die Verbindung zwischen Kartusche und Gerät nicht völlig starr, sondern wird beim Stösselvortrieb elastisch verformt und weicht anschliessend zurück, was, wie beobachtet wurde, ebenfalls zum Nachfliessen beiträgt. Besonders ausge prägt und störend sind diese Erscheinungen bei sogenannten Doppelkartuschen für Zweikomponenten-Massen wie Kleber, Fugen-Füllmassen, Dental-Abdruckmassen usw., mit an die Kartuschenmündung angeschlossenem Strömungsmischer, weil infolge des Mischers der Ausströmwiderstand und somit der zum Austragen erforderliche Kartuschen-Innendruck wie auch die Belastung der Verbindung zwischen Gerät und Kartusche erhöht sind.

Aufgabe der Erfindung ist es, das störende, unkontrollierte Nachfliessen bei von einem Austraggerät bedienten Kartuschen nach Aufhören des Stösselvortriebs möglichst zu verhindern.

Diese Aufgabe wird erfindungsgemäss durch konstruktive Massnahmen am Austraggerät gelöst, welches gekennzeichnet ist durch mindestens ein Rückholorgan für den Stössel, welches einerseits mit einer feststehenden Gerätepartie und anderseits mit dem Stössel in Wirkverbindung steht, indem es am einen der genannten Teile durch Reibschluss verschiebbar geführt und am andern dieser Teile über mindestens eine durch die Vortriebsmittel spannbare Rückholfeder abgestützt und relativ zum abstützenden Teil um einen Rückholweg längsbeweglich ist. Durch diese Ausgestaltung des Gerätes wird erreicht, dass jeweils nach Wegfall der Vortriebskraft am Stössel dieser sogleich von der gespannten Rückholfeder um ein gewisses Mass (den genannten Rückholweg) zurückgeführt, d.h. vom Förderkolben der Kartusche abgehoben wird, wodurch dieser automatisch entlastet wird und entsprechend unter dem in der Kartusche aufgebauten Innendruck zurückweichen kann. Gleichzeitig wird auch die Verankerung der Kartusche am Austraggerät entlastet, so dass wesentliche Ursachen für das Nachfliessen beseitigt sind.

Die weiteren Ansprüche beziehen sich auf besondere, zweckmässige Ausgestaltungen des vorgenannten Erfindungsgedankens, wie insbesondere Massnahmen zur Bemessung des Rückholweges, sowie auf die Verwirklichung der Erfindung an verschiedenen Arten von Austraggeräten.

Nachstehend werden Ausführungsbeispiele von erfindungsgemässen Austraggeräten in Verbindung mit der Zeichnung näher erläutert.

Fig. I zeigt einen Längsschnitt durch ein Gerät gemäss einem ersten Ausführungsbeispiel, wobei eine am Gerät angesetzte Kartusche strichpunktiert angedeutet ist,

Fig. 2 zeigt das Gerät nach Fig. I zur Hälfte in Stirnansicht und zur anderen Hälfte im Schnitt entlang der Linie II - II in Fig. I,

Fig. 3A und 3B zeigen, im Schnitt entlang der Linie III - III in Fig. 2, ein Rückholorgan im Gerätekörper einmal in der Ausgangslage (3A) und einmal in seiner Lage während dem Stösselvortrieb (3B),

Fig. 4 stellt eine weitere Ausführungsform eines erfindungsgemässen Austraggerätes im Längsschnitt dar, und

Fig. 5 zeigt eine weitere Ausführungsform, bei der im Gegensatz zu den vorangehenden Beispielen das Rückholorgan nicht am Stössel, sondern am feststehenden Zylinder eines pneumatischen Vortriebsaggregates geführt ist.

Das Austraggerät nach den Figuren I bis 3 ist für Handbetätigung bestimmt und von an sich bekanntem "pistolenartigem" Grundaufbau. Mit dem gehäuseförmigen, durch einen Deckel I2 an der Rückseite abgeschlossenen Gerätekörper IO ist der Griff II fest verbunden. Es handelt sich um ein Gerät zur Bedienung von Doppelkartuschen, für deren austauschbare Aufnahme die Frontseite des Gerätekörpers (links in Fig. I) ausgebildet ist. Eine Doppelkartusche I weist in bekannter Weise zwei parallel nebeneinanderliegende, zylindrische Kartuschenbehälter 2 auf, die je mit einem Förderkolben 3 versehen und am Eintrittsende z.B. durch einen Flansch 4 verbunden sind. Bei Verwendung der Kartusche I wird deren links der beiden Kolben befindlicher Inhalt durch die Kartuschenmündung am Austrittsende (nicht dargestellt) ausgetrieben, wo üblicherweise ein Strömungsmischer (statischer Mischer) zur Vermischung der beiden Komponenten angeschlossen ist (an sich bekannt und nicht dargestellt).

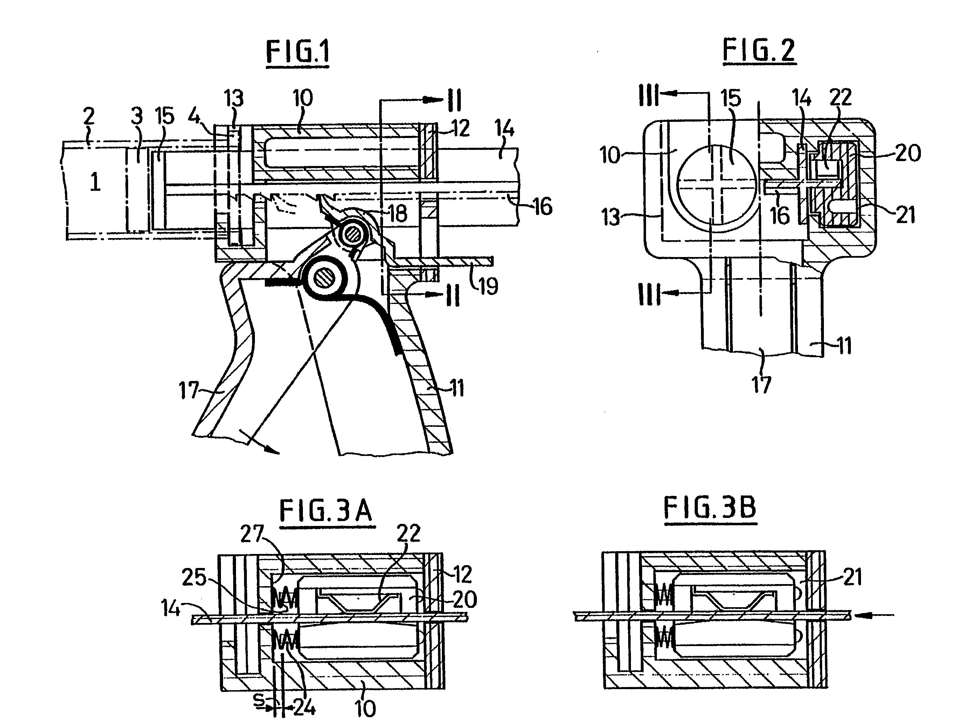

Der Flansch 4 der am Gerät angesetzten Kartusche I greift in eine Führungsnut I3 an der Frontseite des Gerätekörpers IO ein. Für den Vortrieb der Förderkolben 3 der Doppelkartusche ist ein Doppelstössel längsverschiebbar im Körper IO und im Deckel I2 geführt, bestehend aus zwei gleichen Stösselhälften I4, je mit kreuzförmigem Querschnitt und Kopfscheibe I5; beide Stösselhälften sind üblicherweise an ihrem hinteren Ende miteinander verbunden (rechts in Fig. I, nicht sichtbar). Für den Vortrieb des Doppelstössels weist ein Längssteg jeder Stösselhälfte 14 an der Unterseite eine Verzahnung 16 auf. Mit dieser steht eine Klinke 18 im Eingriff, die am Ende eines Handhebels 17 gelagert ist. Der Handhebel 17 ist seinerseits am Griff 11 schwenkbar gelagert. Bei Betätigung des Handhebels in Pfeilrichtung (Fig. 1) wird somit der Doppelstössel nach Bedarf vorgetrieben, wobei die Förderkolben 3 der Kartusche 1 entsprechend beaufschlagt werden. Soll die Kartusche ausgewechselt werden, so kann die Klinke durch Anheben eines Klinkenhebels 19 ausser Eingriff gebracht und der Doppelstössel in seine Ausgangslage zurückgenommen werden, in welcher die Kopfscheiben 15 hinter der Nut 13 (rechts der Nut in Fig. 1) liegen.

Mit einem seitlichen Längssteg jeder Stösselhälfte steht je ein Rückholorgan 20 in Wirkverbindung, dessen Aufbau und Funktion aus den Figuren 2, 3A und 3B ersichtlich sind. Jedes Rückholorgan 20 ist in einer Seitenkammer 21 des Gerätekörpers bzw. Gehäuses 10 lose geführt und relativ zur feststehenden Gerätepartie 10, an der sich die Federn 25 abstützen, um einen Weg s (Fig. 3A) längsbeweglich. Zwischen einer im block förmigen Organ 20 eingesetzten Klemmfeder 22 und einer Gegenfläche ist der Längssteg des Stössels eingespannt, wodurch zwischen Rückholorgan und Stössel ein Reibschluss mit vorbestimmter Reibungskraft besteht. Zwischen jedem Organ 20 und der Vorderwand 27 der betreffenden Kammer 21 im feststehenden Gerätekörper 10 befinden sich zwei als Rückholfedern dienende Druckfedern 25, jede geführt auf einem Stift 24.

Jeweils bei nicht vorgetriebenem, unbelastetem Stössel 14 befindet sich das Rückholorgan 20 in einer Ausgangslage bezüglich dem Gehäuse 10 gemäss Fig. 3A. Dabei wird es durch die Federn 25 im Anschlag gegen den Gehäusedeckel 12 gehalten. Wird der Stössel 14 durch Betätigung des Handhebels 17 und Eingriff der Klinke 18 vorgetrieben (Pfeil in Fig. 3B), so wird das Organ 20 über den genannten Reibschluss zunächst mitgenommen, bis die Stifte 24 an der Wand 27 anschlagen, wobei die Federn 25 gespannt werden (Fig. 3B); während dem weiteren Vortrieb des Stössels wird dann die Reibungskraft der Klemmfeder 22 ohne weiteres überwunden, wobei das Organ 20 im Anschlag nach Fig. 3B verharrt. Wird hierauf der Stösselvortrieb durch Loslassen des Handhebels 17 beendet und weicht die Klinke 18 zurück, so entspannen sich sogleich die Federn 25 und führen das Rückholorgan 20 um den Weg s in die Ausgangslage nach Fig. 3A zurück, wobei der Stössel durch den Reibschluss ebenfalls um diesen Weg zurückweicht und sich von den Förderkolben 3 der Kartusche entsprechend abhebt. Damit das Rückholorgan 20 beim Stösselvortrieb sicher bis zum Anschlag 27 mitgenommen wird, soll die Reibungskraft des Reibschlusses grösser sein als die Kraft der gespannten Federn 25, anderseits sollen die Federn etwas vorgespannt sein, um den unbelasteten Stössel entgegen der durch seine Führung im Gerätekörper 10 bedingten (geringen) Reibung in die Ausgangslage nach Fig. 3A zurückzuführen. (Die vorstehenden Ausführungen beziehen sich natürlich jeweils auf beide am Doppelstössel 14 geführten Rückholorgane 20).

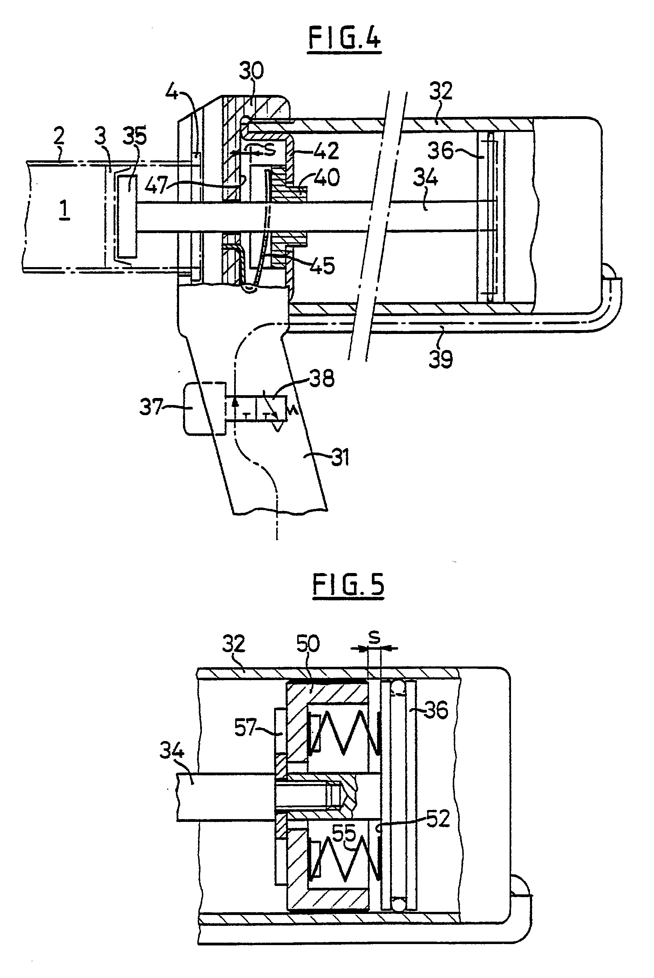

Das weitere Ausführungsbeispiel eines Austraggerätes nach Fig. 4 ist zum Betrieb mit Druckluft bestimmt und weist für den Stössel-Vortrieb eine Zylinder/Kolbeneinheit auf. Der feststehende Gerätekörper wird durch ein Kopfteil 30 mit Handgriff 31 gebildet. Das Kopfteil 30 ist zur Aufnahme von auswechselbaren Kartuschen 1 ausgebildet (Kartuschenteile mit gleichen Bezugszahlen bezeichnet wie in Fig. 1). Mit dem Kopfteil 30 ist ferner ein Druckluftzylinder 32 mit Kolben 36 verschraubt. Die Druckluft aus einer externen Quelle wird dem Zylinder 32 vorzugsweise über den Handgriff 31, ein darin eingebautes, mittels Drucktaste 37 zu betätigendes Ventil 38 und die Leitung 39 zugeführt; das Ventil sorgt in bekannter Weise auch für Druckentlastung des Zylinders 32 hinter dem Kolben 36 jeweils bei unbetätigter Drucktaste 37. Die mit dem Kolben 36 verbundene Kolbenstange 34 ist im Kopfteil 30 geführt und bildet den Stössel zur Beaufschlagung des Kartuschenkolbens 3 mittels einer Kopfscheibe 35.

Auf dem Stössel 34 sitzt reibschlüssig verschiebbar ein Rückholorgan 40. Dieses befindet sich zwischen einer Anschlagfläche 47 des Kopfteils 30 und einem z.B. mit dem Zylinder 32 gegen das Kopfteil gespannten Haltetopf 42, wobei zwischen der Anschlagfläche 47 und dem Boden des Topfes 42 ein Verschiebeweg s relativ zur feststehenden Gerätepartie für das Rückholorgan 40 besteht. Zwischen dem letzteren und dem Kopfteil 30 ist wiederum eine Rückholfeder - hier in Form einer Blattfeder 45 - verspannt. Für den Reibschluss des Organs 40 auf dem Stössel 34 sowie für die Rückholfeder 45 gelten im wesentlichen dieselben Ueberlegungen wie beim Ausführungsbeispiel nach Fig. 1 bis 3. Die Reibkraft des Rückholorgans 40 auf dem Stössel 34 kann durch die Weite der Bohrung bemessen werden oder durch andere Mittel, beispielsweise indem das Organ zweiteilig ausgeführt wird und die beiden Teile dosiert gegen die Stösselstange verspannt werden.

Die Wirkungsweise ist beim Gerät nach Fig. 4 ebenfalls analog wie beim vorbeschriebenen Beispiel: Zu Beginn des Stösselvortriebs bei Druckluft-Beaufschlagung des Kolbens 36 wird jeweils das Rückholorgan über den Reibschluss bis zum Anschlag an der Fläche 47 mitgenommen und die Feder 45 entsprechend gespannt, und nach Wegfall des den Stössel vortreibenden Luftdruckes im Zylinder 32 und Zylinder-Entlüftung führt die Rückholfeder 45 das Rückholorgan 40 und (über den Reibschluss) den Stössel 34 um den Weg s zurück, wodurch der Kartuschenkolben und die Kartuschen-Verankerung am Kopfteil 30 sofort entlastet werden.

Das nur teilweise dargestellte Austraggerät nach Fig. 5 ist wiederum zum Betrieb mit Druckluft bestimmt und für den Stössel-Vortrieb mit einer Zylinder/Kolbeneinheit versehen. Jedoch ist die Anordnung der Rückholmittel für den Stössel gegenüber beiden vorangehenden Ausführungsbeispielen in dem Sinne "umgekehrt", dass hier das Rückholorgan an einer feststehenden Gerätepartie (am Zylinder) durch Reibschluss geführt ist (anstatt am Stössel), sich dagegen über Rückholfedern am längsbeweglichen Stössel (anstatt an einer feststehenden Partie) abstützt.

Beim Gerät nach Fig. 5 ist der Gerätekörper mit Kopfteil und Handgriff im wesentlichen gleich wie beim Beispiel nach Fig. 4 und deshalb nicht dargestellt; jedoch entfallen das Rückholorgan 4O, die Rückholfeder 45 und der Haltetopf 42 nach Fig. 4. An deren Stelle ist ein ringförmiges Rückholorgan 5O vorhanden, welches entlang der Innenwand des feststehenden Zylinders 32 reibschlüssig verschiebbar geführt ist. Der Stössel 34 (Kolbenstange) ist mit dem Kolben 36 verschraubt, wobei gleichzeitig eine radiale Scheibe 57 festgehalten ist. Diese Scheibe 57 und die ihr zugekehrte Kolbenseite 52 bilden beidseitige Anschläge für das Rückholorgan 5O, welche einen Rückholweg s bestimmen, um den das Rückholorgan relativ zum Stössel 34 längsbeweglich ist. Ueber Druckfedern 55 stützt sich das Organ 5O am Kolben 36 und dadurch mittelbar am Stössel 34 ab. Die Rückholfedern 55 halten im dargestellten Ruhezustand das Or gan 5O gegen den Anschlag 57, werden aber beim Vortrieb des Stössels 34 gespannt, so dass dann das Organ 5O im Anschlag mit der Kolbenfläche 52 nach links (in Fig. 5) mitgeführt wird, wobei es entlang dem Zylinder 32 gleitet. Wenn der Vortrieb beendet ist und der Druck im Zylinder rechts des Kolbens wegfällt, bleibt das Rückholorgan 5O durch den Reibschluss am Zylinder 32 stehen, die Federn 55 entspannen sich und führen den Kolben 36 mit Stössel 34 um den Weg s zurück, um den Stössel vom Förderkolben in der Kartusche abzuheben (in Fig. 5 nicht sichtbar).

Alle beschriebenen Ausführungsbeispiele lassen sich natürlich sinngemäss auf Geräte für Einfachkartuschen wie auf solche für Doppelkartuschen (Geräte mit Doppelstössel) anwenden. Die Rückholfeder muss nicht notwendigerweise eine Druckfeder sein, auch eine auf der entgegengesetzten Seite des Rückholorgans angeordnete Zugfeder ist denkbar. Anschläge für die Längsbewegung des Rückholorgans sind zweckmässig, um einen genauen Verschiebeweg s des Stössels zu definieren, jedoch ist es auch möglich, die Mitnahme beim Stösselvortrieb lediglich durch die ansteigende Federkraft der Rückholfeder zu begrenzen, indem das Rückholorgan am Stössel (Fig. I bis 4) bzw. am Zylinder (Fig. 5) zu gleiten beginnt, sobald die Federkraft die Haftreibung des Reibschlusses überwindet. In allen Fällen muss die Reibungskraft des Reibschlusses grösser sein als die Kraft der gespannten Rückholfedern, und diese Federkraft muss wiederum grösser sein als die (relativ geringe) Reibung, mit welcher der Stössel (und alle mit ihm verbundenen Teile) am feststehenden Gerätekörper geführt ist.
2596

## Patentansprüche

I. Austraggerät zur Bedienung von mit Förderkolben (3) versehenen Kartuschen (I), mit einem am Gerätekörper (IO, 3O) längsbeweglich geführten Stössel (I4, 34) für die Förderkolben-Beaufschlagung sowie Vortriebsmitteln (I6, I8; 32, 36) für den Stössel, gekennzeichnet durch mindestens ein Rückholorgan (2O, 4O, 5O) für den Stössel, welches einerseits mit einer feststehenden Gerätepartie und anderseits mit dem Stössel in Wirkverbindung steht, indem es am einen der genannten Teile (I4, 34; 32) durch Reibschluss verschiebbar geführt und am andern dieser Teile (IO, 3O; 34) über mindestens eine durch die Vortriebsmittel (I7, I8; 32, 36) spannbare Rückholfeder (25, 45, 55) abgestützt und relativ zum abstützenden Teil (IO, 3O; 34) um einen Rückholweg (s) längsbeweglich ist.

2. Austraggerät nach Anspruch I, dadurch gekennzeichnet, dass die Länge des Rückholweges (s) durch Anschläge (I2, 27; 42, 47; 52, 57) am abstützenden Teil (IO, 3O; 34) begrenzt ist.

3. Austraggerät nach Anspruch I oder 2, dadurch gekennzeichnet, dass als Rückholfeder eine oder mehrere Druckfedern (25, 45, 55) vorgesehen sind.

4. Austraggerät nach einem der vorangehenden Ansprüche, dadurch gekennzeichnet, dass das Rückholorgan (2O, 4O) am Stössel (I4, 34) durch Reibschluss geführt und am Gerätekörper (IO, 3O) federnd abgestützt ist.

5. Austraggerät nach Anspruch 4, dadurch gekennzeichnet, dass die Vortriebsmittel durch einen mit einer Längszahnung (I6) am Stössel (I4) zusammenwirkenden Klinkenmechanismus (I8) gebildet sind.

6. Austraggerät nach Anspruch 4, dadurch gekennzeichnet, dass die Vortriebsmittel durch eine druckluftbetriebene Zylinder/Kolbeneinheit (32, 36) gebildet sind, deren Zylinder (32) mit dem Gerätekörper (3O) und deren Kolben (36) mit dem Stössel (34) verbunden ist.

7. Austraggerät nach einem der Ansprüche I bis 3, dadurch gekennzeichnet, dass die Vortriebsmittel durch eine druckluftbetriebene Zylinder/Kolbeneinheit (32, 36) gebildet sind, deren Zylinder (32) mit dem Gerätekörper (3O) und deren Kolben (36) mit dem Stössel (34) verbunden ist, und dass das Rückholorgan (5O) am Zylinder (32) durch Reibschluss geführt und am Kolben (36) federnd abgestützt ist.

8. Austraggerät nach einem der vorangehenden Ansprüche, dadurch gekennzeichnet, dass es zur Aufnahme von Doppelkartuschen (I) ausgebildet ist und der Stössel (I4, 34) ein Doppelstössel ist.

## Claims

1. A dispensing device for operating cartridges (1) provided with plungers (3), having a ram (14, 34) longitudinally guided on the device body (10, 30) for loading the plunger as well as advance means (16, 18; 32, 36) for the ram, characterised by at least one return unit (20, 40, 50) for the ram, which is on the one hand in operative connection with a stationary portion of the device, and on the other hand is in a like connection with the ram, being movably guided by friction hold on one of the said parts (14, 34; 32) and is supported on the other of these parts (10, 30; 34) via at least one return spring (17, 18; 32, 36), and is longitudinally movable relative to the supporting part (10, 30; 34) over a determined return path (s).

2. A despensing device according to Claim 1, characterised in that the length of the return path (s) is limited by stops (12, 27; 42, 47; 52, 57) on the supporting part (10, 30; 34).

3. A dispensing device according to Claim 1 or 2, characterised in that one or more pressure springs (25, 45, 55) are provided as return springs.

4. A dispensing device according to one of the foregoing Claims, characterised in that the return unit (20, 40) is guided by friction hold on the ram (14, 34) and is resiliently supported on the device body (10, 30).

5. A dispensing device according to Claim 4, characterised in that the advance means are formed by a ratchet mechanism (18) cooperating with a longitudinal tooth system (16) on the ram (14).

6. A dispensing device according to Claim 4, characterised in that the advance means are formed by a cylinder/piston unit (32, 36) driven by compressed air, the cylinder (32) of said system being connected to the device body (30) and its piston (36) being connected to the ram (34).

7. A dispensing device according to one of Claims 1 to 3, characterised in that the advance means are formed by a cylinder/piston unit (32, 36) driven by compressed air, the cylinder (32) of said system being connected to the device body (30) and its piston (36) being connected to the ram (34), and that the return unit (50) is guided by friction hold on the cylinder (32), and is resiliently supported on the piston (36).

8. A dispensing device according to one of the foregoing Claims, characterised in that it is designed to receive double cartridges (1) and that the ram (14, 34) is a double ram.

**Revendications**

1. Appareil distributeur pour la commande de cartouches (1) pourvues de pistons d'alimentation (3), comportant un poussoir (14, 34), guidé mobile longitudinalement sur le corps d'appareil (10, 30) pour agir sur les pistons d'alimentation, ainsi que des moyens d'avance (16, 18; 32, 36) pour le poussoir, caractérisé par au moins un organe de rappel (20, 40, 50) du poussoir, qui d'une part est en liaison active avec une partie d'appareil fixe et d'autre part avec le poussoir, en ce qu'il est guidé coulissant, par friction, sur l'un des éléments cités (14, 34; 32), et prend appui sur l'autre de ces éléments (10, 30; 34), par au moins un ressort de rappel (25, 45, 55) pouvant être tendu par les moyens d'avance (17, 18; 32, 36), et est mobile longitudinalement, par rapport à l'élément d'appui (10, 30; 34), sur une course de rappel (s).

2. Appareil distributeur selon la revendication 1, caractérisé en ce que la longueur de la course de rappel (s) est limitée par des butées (12, 27; 42, 47; 52, 57), sur l'élément d'appui (10, 30; 34).

3. Appareil distributeur selon la revendication 1 ou 2, caractérisé en ce qu'on prévoit comme ressort de rappel, un ou plusieurs ressorts de pression (25, 45, 55).

4. Appareil distributeur selon l'une quelconque des revendications ci-dessus, caractérisé en ce que l'organe de rappel (20, 40) est guidé, par friction, sur le poussoir (14, 34) et prend appui, de manière élastique, sur le corps d'appareil (10, 30).

5. Appareil distributeur selon la revendication 4, caractérisé en ce que les moyens d'avance sont formés par un mécanisme à cliquet (18), coopérant avec une denture longitudinale (16) du poussoir (14).

6. Appareil distributeur selon la revendication 4, caractérisé en ce que les moyens d'avance sont formés par une unité à cylindre et piston (32, 36), à air comprimé, dont le cylindre (32) est relié au corps d'appareil (30) et le piston (36) au poussoir (34).

7. Appareil distributeur selon l'une quelconque des revendications 1 à 3, caractérisé en ce que les moyens d'avance sont formés par une unité à cylindre et piston (32, 36) à air comprimé, dont le cylindre (32) est relié au corps d'appareil (30) et le piston (36) au poussoir (34), et en ce que l'organe de rappel (50) est guidé sur le cylindre (32), par friction, et prend appui, de manière élastique, sur le piston (36).

8. Appareil distributeur selon l'une quelconque des revendications ci-dessus, caractérisé en ce qu'il est conçu pour recevoir des cartouches doubles (1), et en ce que le poussoir (14, 34) est un poussoir double.

FIG.1

FIG.2

FIG.3A

FIG.3B

## FIG.4

## FIG.5